# EUROPÄISCHE PATENTANMELDUNG

(11) **EP 1 746 401 A2**
(43) Veröffentlichungstag der Anmeldung: **24.01.2007**
(21) Anmeldenummer: 06004184.5
(22) Anmeldetag: 02.03.2006
(51) Int. Cl.: G01M 1/36, F16F 15/32

(54) **Verfahren zur Montage eines Reifens auf ein Rad**

(30) Priorität: 22.07.2005 DE 102005034967
(71) Anmelder: Schedl Automotive System Service GmbH & Co. KG, 53117 Bonn (DE)
(72) Erfinder: Fierens, Patrik, 9320 Nieuwerkerken (BE)
(74) Vertreter: COHAUSZ DAWIDOWICZ HANNIG & SOZIEN

(57) **Zusammenfassung**

Verfahren zur Montage eines Reifens (1) auf einem Rad (3), wobei der Reifen (1) eine insbesondere eine mechanische Eigenschaft des Reifens (1) kennzeichnende Markierung (2) aufweist, wobei der Reifen (1) durch zumindest ein Montagewerkzeug (5, 6) auf dem Rad (2) montierbar ist, wobei vor der Montage des Reifens (1) durch das Werkzeug (5, 6) die Markierung (2) an dem Reifen (1) erfasst und der Reifen (1) anhand dieser Markierung (2) in Umfangsrichtung relativ zu dem Werkzeug (5, 6) ausgerichtet wird.

## Beschreibung

Die Erfindung betrifft ein Verfahren zur Montage eines Reifens auf einem Rad, wobei der Reifen eine insbesondere eine mechanische Eigenschaft des Reifens kennzeichnende Markierung aufweist, wobei der Reifen durch zumindest ein Montagewerkzeug auf dem Rad montierbar ist.

Derartige Verfahren zur Montage eines Reifens auf einem Rad sind bekannt. Dabei wird der Reifen einer Montagevorrichtung, mittels derer die Montage des Reifens auf dem Rad erfolgt, in beliebiger Winkelpositionierung, d.h. in beliebiger Drehwinkelstellung des Reifens zu der Vorrichtung und zu dem Rad, zugeführt. Die Reifen sind dabei mit einer Markierung versehen, wobei diese Markierung insbesondere den Tiefpunkt der Kraftschwankung des Reifens oder den Massenschwerpunkt oder den Konizitätspunkt etc. des Reifens markiert, wobei diese Markierung bereits seitens des Reifenherstellers an dem Reifen angebracht wird.

Diese Markierung dient dem Matchen des Reifens auf dem Rad. Matchen ist ein Verfahren bei der Reifenmontage, das zum optimalen Rundlauf des Reifens beiträgt. Dabei werden Rundlaufabweichungen von Rad und Reifen so miteinander kombiniert, dass sie sich gegenseitig weitgehend neutralisieren. Die Reifen werden vom Hersteller vermessen und mit einer Markierung als Matchpunkt an der Reifenflanke gekennzeichnet. Bei dem Matchen erfolgt somit nach der Montage des Reifens auf dem Rad in beliebiger Drehwinkelposition ein nachträgliches Verdrehen relativ zu dem Rad.

Nachteilig bei diesem Verfahren ist, da der Reifen nicht in einer definierten Position der Montagevorrichtung zugeführt wird, dass der Reifen bei der Montage mittels eines Montagewerkzeuges an einer Stelle schlechterer mechanischer Eigenschaften von der Kraft des Montagewerkzeuges beaufschlagt werden kann, wodurch der Reifen zusätzlich geschwächt werden kann und sich hierdurch die Rundlaufeigenschaften des Komplettrades aus Rad und Reifen verschlechtern.

Weiterhin nachteilig bei diesem bekannten Montageverfahren ist, dass im Anschluss an die Montage des Reifens auf dem Rad ein Matchen, d.h. ein Verdrehen des Reifens gegenüber dem Rad, zur Erzielung eines optimalen Rundlaufs erforderlich ist, d.h. dass bei dem bekannten Verfahren ein weiterer Fertigungs- bzw. Montageschritt erforderlich ist.

Aufgabe der Erfindung ist es, ein Verfahren zur Montage eines Reifens auf einem Rad so zu verbessern, dass die Gefahr einer Beeinträchtigung der Reifeneigenschaften durch die Beaufschlagung des Reifens mit der für die Montage erforderlichen Kraft durch das Werkzeug minimiert wird und insbesondere ein nachträgliches Ausrichten des Reifens gegenüber dem Rad (Matchen) nicht mehr erforderlich ist.

Diese Aufgabe wird erfindungsgemäß dadurch gelöst, dass bei einem gattungsgemäßen Verfahren zur Montage eines Reifens auf einem Rad vor der Montage des Reifens durch das Werkzeug die Markierung an dem Reifen erfasst und der Reifen anhand dieser Markierung in Umfangsrichtung relativ zu dem Werkzeug ausgerichtet wird.

Dadurch dass bereits vor der Montage des Reifens durch das Werkzeug die Markierung, die seitens des Herstellers an dem Reifen angebracht wird, erfasst und der Reifen anhand dieser Markierung in Umfangsrichtung, d.h. hinsichtlich seiner Winkelpositionierung relativ zu dem Werkzeug ausgerichtet wird, wird es auf sehr leichte Weise gewährleistet, dass der Reifen während des Montageprozesses im Rahmen einer Massenfertigung nicht in nachteiliger Weise von dem Werkzeug mit einer Kraft beaufschlagt wird, d.h. dass der Reifen nicht an einer mechanisch ungünstigen Position, die eine Schwächung des Reifens, insbesondere eine lokale Schwächung der mechanischen Eigenschaften des Reifens, hervorrufen könnte, beaufschlagt wird.

Weiterhin vorteilhaft bei dem erfindungsgemäßen Verfahren ist es, dass ein nachträgliches Matchen des Reifens, d.h. ein Verdrehen des Reifens relativ zu dem Rad nach der Montage des Reifens auf dem Rad, nicht mehr erforderlich ist und somit das Montageverfahren deutlich vereinfacht wird, preiswerter ist und schneller ausgeführt werden kann.

Weitere vorteilhafte Weiterbildungen des erfindungsgemäßen Verfahrens sind in den Unteransprüchen angegeben.

So ist es besonders vorteilhaft, wenn der Reifen mit der Markierung einer Montagevorrichtung in anhand der Markierung definierter Umfangsposition zugeführt wird, d.h. dass eine Ausrichtung des Reifens bereits vor der Zuführung in die Montagevorrichtung erfolgt und ein Ausrichten innerhalb einer solchen Montagevorrichtung vor der Durchführung der Montage nicht erforderlich ist.

Vorteilhaft ist es, wenn der Reifen mit der Markierung an dem Reifen mittels einer optischen Einheit, insbesondere mittels eines Kamerasystems, gescannt und einem Auswertesystem zugeführt wird. Insbesondere kann mittels des Auswertesystems der erforderliche Drehwinkel zur Ausrichtung des Reifens in Umfangsrichtung relativ zu dem Werkzeug und/oder der Montagevorrichtung ermittelt werden.

Hierdurch wird eine vollautomatische Ausrichtung des Reifens und Montage des Reifens auf dem Rad ermöglicht, was insbesondere im Rahmen einer Massen- oder Serienfertigung von Vorteil ist.

Bevorzugt ist das Rad durch Betätigung einer Spanneinheit festlegbar. Hierdurch kann das Rad zur Montage des Reifens auf dem Rad fixiert werden.

Vorzugsweise wird nach einem Zuführen des Rades zu einer Montagevorrichtung ein Zentrieren des Rades mittels eines in ein Mittenloch des Rades eingreifenden Zentrierdornes durchgeführt. Hierdurch kann das Rad innerhalb der Montagevorrichtung auf leichte und zuverlässige Weise zentriert werden.

Bevorzugt erfolgt vor der Montage des Reifens auf dem Rad ein Seifen des Rades und/oder des Reifens. Durch Hinzufügen von Seife als Gleitmittel werden die erforderlichen Montagekräfte reduziert und damit Beschädigungen oder Beeinträchtigungen des Reifens vorgebeugt.

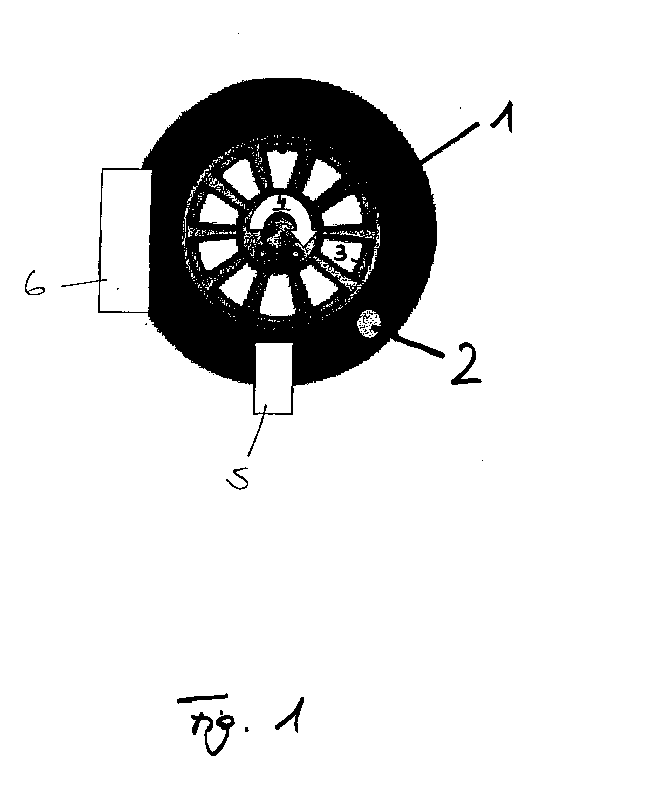

Eine mögliche Umsetzung des erfindungsgemäßen Verfahrens wird anhand der Figur 1 nachfolgend erläutert.

Figur 1 zeigt ein montiertes Komplettrad in der Ansicht in Achsrichtung mit dem Reifen 1, der auf dem Rad 3 montiert ist. Der Reifen 1 verfügt über eine Markierung 2, die seitens des Reifenherstellers an dem Reifen 1 angebracht ist und in Abhängigkeit einer Eigenschaft des Reifens 1 vorgenommen wurde, d.h. dass die Markierung 2 des Reifens 1 eine definierte Position kennzeichnet.

Die Montage des Reifens 1 auf dem Rad 3 erfolgt dadurch, dass der Reifen 1 schräg über das Rad 3 gelegt wird und sodann zunächst die untere Wulst des Reifens 1 montiert wird und sodann die obere Wulst des Reifens 1 montiert wird. Untere bzw. obere Wulst beziehen sich auf die Lage der Wulst in der Aufsicht gemäß Figur 1 auf das Komplettrad. Zur Montage des Reifens 1 wird dieser Reifen mittels der Montagewerkzeuge 5 und 6 gehalten und gegen ein Verrutschen und Verdrehen gegenüber dem Rad 3 gesichert. Sodann wird der Reifen 1 mittels einer nicht dargestellten Montagerolle in das Tiefbett des Rades 3 gedrückt. Die Drehrichtung der Montagerolle ist angedeutet durch den Pfeil 4.

Der Reifen 1 wird vor der Montage des Reifens 1 anhand der Markierung 2 relativ zu den Werkzeugen 5 und 6 ausgerichtet, d.h. der Reifen 1 wird der Montagevorrichtung bereits in dieser Position zugeführt.

Dadurch dass der Reifen 1 mit der Markierung 2 vor dem Einsatz der Montagewerkzeuge 5, 6 bereits in einer definierten Position hinsichtlich der Drehwinkelposition der Markierung 2 des Reifens 1 zu den Werkzeugen 5, 6 zugeführt wird, ist es gewährleistet, dass der Reifen 1 von den Werkzeugen 5, 6 nicht an Stellen mit einer Kraft beaufschlagt wird, deren Beaufschlagung zu einer Verschlechterung der mechanischen Eigenschaften des Reifens 1, insbesondere seiner Rundlaufeigenschaften, führen könnte.

Des weiteren ist dadurch, dass der Reifen 1 mit der Markierung 2 bereits vor der Montage des Reifens ausgerichtet wird, ein Verdrehen, d.h. ein Matchen des Reifens 1 auf dem Rad 3 nach der Montage nicht mehr erforderlich.

## Patentansprüche

1. Verfahren zur Montage eines Reifens (1) auf einem Rad (3), wobei der Reifen (1) eine insbesondere eine mechanische Eigenschaft des Reifens (1) kennzeichnende Markierung (2) aufweist, wobei der Reifen (1) durch zumindest ein Montagewerkzeug (5, 6) auf dem Rad (2) montierbar ist, **dadurch gekennzeichnet, dass** vor der Montage des Reifens (1) durch das Werkzeug (5, 6) die Markierung (2) an dem Reifen (1) erfasst und der Reifen (1) anhand dieser Markierung (2) in Umfangsrichtung relativ zu dem Werkzeug (5, 6) ausgerichtet wird.

2. Verfahren nach Anspruch 1, **dadurch gekennzeichnet, dass** der Reifen (1) mit der Markierung (2) einer Montagevorrichtung in anhand der Markierung (2) definierter Winkelposition zugeführt wird.

3. Verfahren nach Anspruch 1 oder 2, **dadurch gekennzeichnet, dass** der Reifen (1) mit der Markierung (2) an dem Reifen (1) mittels einer optischen Einheit, insbesondere mittels eines Kamerasystems, gescannt und einem Auswertesystem zugeführt wird.

4. Verfahren nach Anspruch 3, **dadurch gekennzeichnet, dass** mittels des Auswertesystems der erforderliche Drehwinkel zur Ausrichtung des Reifens (1) in Umfangsrichtung relativ zu dem Werkzeug (5, 6) und/oder einer Montagevorrichtung ermittelt wird.

5. Verfahren nach einem der vorherigen Ansprüche, **dadurch gekennzeichnet, dass** das Rad (3) durch Betätigung einer Spanneinheit festlegbar ist.

6. Verfahren nach einem der vorherigen Ansprüche, **dadurch gekennzeichnet, dass** nach einem Zuführen des Rades (3) zu einer Montagevorrichtung ein Zentrieren des Rades (3) mittels eines in ein Mittenloch des Rades (3) eingreifenden Zentrierdornes erfolgt.

7. Verfahren nach einem der vorherigen Ansprüche, **dadurch gekennzeichnet, dass** vor der Montage des Reifens (1) auf dem Rad (3) ein Seifen des Rades (3) und/oder des Reifens (1) erfolgt.

8. Verfahren nach einem der vorherigen Ansprüche, **dadurch gekennzeichnet, dass** der Reifen (1) mittels zumindest eines Montagewerkzeuges (5, 6) gehalten und/oder auf dem Rad (3) montiert wird.
